# FASCICULE DE BREVET EUROPEEN

(11) **EP 2 671 765 B1**
(45) Date de publication et mention de la délivrance du brevet: **31.07.2019**
(21) Numéro de dépôt: 13168829.3
(22) Date de dépôt: 23.05.2013
(51) Int. Cl.: B60S 1/08, B60S 1/48

(54) **SYSTÈME DE NETTOYAGE A DISTANCE D'UN PARE-BRISE DE VÉHICULE**
FERNREINIGUNGSSYSTEM DER WINDSCHUTZSCHEIBE EINES FAHRZEUGS
SYSTEM FOR REMOTE CLEANING OF A VEHICLE WINDSCREEN

(30) Priorité: 08.06.2012 FR 1255367
(43) Date de publication de la demande: 11.12.2013
(73) Titulaire: Valeo Systèmes d'Essuyage, 78322 Le Mesnil Saint Denis (FR)
(72) Inventeur: Giraud, Frédéric, 78610 Le Perray en Yvelines (FR); Dias, Dominique, 78470 St. Remy les chevreuses (FR); Caillot, Gérald, 78720 Cernay la Ville (FR); Sakai, Izumi, 75015 Paris (FR)
(74) Mandataire: Callu-Danseux, Violaine

(56) Documents cités:
- DE-A1- 19 911 584
- GB-A- 2 356 128
- JP-A- 2008 155 801
- US-A1- 2002 137 455
- US-A1- 2006 130 877
- US-A1- 2006 220 598

## Description

L'invention concerne un procédé de nettoyage d'un pare-brise d'un véhicule, notamment automobile. Elle concerne également un dispositif de contrôle configuré pour la mise en oeuvre dudit procédé et un système de nettoyage ainsi qu'une télécommande associés.

Les automobiles sont couramment équipées d'un dispositif d'essuyage pour assurer un essuyage du pare-brise et éviter que la vision qu'a le conducteur de son environnement ne soit perturbée. Un tel dispositif comprend généralement deux balais d'essuyage qui raclent la surface extérieure du pare-brise de manière à évacuer en dehors du champ de vision du conducteur l'eau et les salissures présentes sur cette surface.

Il est également connu d'équiper les automobiles d'un dispositif de lavage agencé pour projeter un liquide sur le pare-brise, de manière à faciliter la dissolution des salissures, et ainsi augmenter la qualité du nettoyage du pare-brise. Les dispositifs de lavage les plus répandus comprennent au moins deux gicleurs distincts installés sur un capot du véhicule, l'un de ces gicleurs étant dédié à l'arrosage d'une zone du pare-brise située en face du conducteur du véhicule, alors que l'autre gicleur est affecté à l'arrosage d'une zone du pare-brise située en face du passager avant de véhicule. Après projection d'un liquide lave-glace sur le pare-brise, l'essuyage est activé.

On connaît par US2006220598 un système de commande à distance du lavage d'un pare brise d'un véhicule, notamment automobile. Un tel système permet de bénéficier de liquide de lavage sans activation des balais d'essuyage. On peut alors effectuer un nettoyage manuel du pare brise. Bien que ce document prévoie une émission à distance d'un ordre de projection du liquide lave-glace, le système décrit n'est pas configuré pour exécuter le nettoyage sans l'intervention d'un opérateur.

Le document US 2002/0137455 A1 montre un procédé de nettoyage d'un pare-brise d'un véhicule selon le préambule de la première revendication.

Il existe donc un besoin pour nettoyer un pare-brise de véhicule, sans devoir essuyer manuellement ce dernier avant de démarrer le véhicule.

L'invention propose ainsi un procédé de nettoyage d'un pare brise d'un véhicule, notamment automobile, le procédé comprenant une phase d'activation à distance d'un cycle de nettoyage d'un pare-brise dudit véhicule, ledit cycle de nettoyage comprenant au moins une phase d'essuyage à l'aide d'un dispositif d'essuyage dudit véhicule.

Par « activation à distance », on entend une activation sans agir sur les commandes classiques «sous volant » du véhicule. Autrement dit, selon l'invention, l'activation du cycle de nettoyage a lieu sans que le conducteur soit nécessairement derrière le volant. On pourra de la sorte nettoyer à distance le pare-brise avant même de pénétrer dans son véhicule.

Cela étant, ledit cycle de nettoyage comprend une phase préalable de lavage du pare-brise à l'aide d'un dispositif de lavage dudit véhicule.

A ce sujet, la déposante a pu mettre en évidence la difficulté suivante. Il est préférable que l'essuyage soit efficace malgré les salissures présentes sur le pare-brise. Or l'on sait que l'efficacité des balais d'essuyage n'est pas optimum en cas de présence de salissures sèches. De plus, l'utilisateur peut ignorer le degré de salissure du pare-brise puisqu'il active le nettoyage à distance. Son véhicule peut donc être hors de vue. Une solution serait d'activer systématiquement le dispositif de lavage avant le dispositif d'essuyage mais l'on risque alors d'utiliser inutilement du liquide lave-glace.

Pour assurer un nettoyage efficace malgré ces difficultés, le procédé comprend une phase de test de la présence d'eau et/ou de pluie sur le pare-brise, destinée à configurer le cycle de nettoyage du pare brise.

Il résulte de cette disposition une mise en oeuvre d'un cycle de nettoyage du pare brise qui tient compte d'un état suffisant de dégradation des impuretés solides telles que boues, fientes, insectes présentes sur le pare brise et permet d'éviter une surconsommation de liquide lave-glace.

Un résultat positif de la phase de test active la phase d'essuyage du pare brise et un résultat négatif de la phase de test autorise la phase de lavage du pare brise suivie d'une phase d'attente, avant activation de la phase d'essuyage du pare-brise. On s'assure de la sorte d'une dégradation suffisante des impuretés présentes sur le pare-brise avant essuyage. Ce dernier est ainsi facilité et la durée de vie de la lame de raclage du balai d'essuyage est allongée, puisque cette dernière ne rencontre pas de corps solide, de nature à l'endommager. Un autre avantage de ce procédé est que l'on évite d'effectuer systématiquement une phase préalable de lavage alors que cette dernière n'est pas nécessaire si le pare-brise est déjà humide.

Ladite phase d'essuyage comprend, par exemple, une phase d'actionnement de balais dudit dispositif d'essuyage.

Ladite phase de lavage comprend, par exemple, une phase de projection d'un liquide de lavage sur le pare-brise du véhicule.

Ladite phase d'attente utilise, par exemple, une durée d'attente prédéterminée. Ladite durée prédéterminée est comprise, notamment, entre quelques secondes et quelques minutes, par exemple 5 secondes à 2 minutes, pouvant varier selon le liquide de lavage.

Selon une caractéristique de l'invention, on chauffe ledit liquide de lavage lors de la phase de lavage. Il est ainsi possible de renforcer son efficacité.

On pourra aussi employer un liquide de lavage formulé de sorte que le temps d'imprégnation et de dissolution des impuretés ou salissures sur le pare brise, véhicule à l'arrêt, soit réduit. Autrement dit, le liquide de lavage utilisé lors de ladite phase de lavage pourra être différent d'un liquide de lavage utilisé lors du roulage du véhicule.

Ledit liquide de lavage utilisé lors de ladite phase de lavage est, par exemple, enrichi en acide formique, relativement au liquide de lavage utilisé lors du roulage du véhicule, ce qui accroît la capacité du produit de lavage à dissoudre des insectes collés sur le pare brise.

Ledit liquide de lavage utilisé lors de ladite phase de lavage pourra aussi être enrichi en produits tensio actifs, relativement au liquide de lavage utilisé lors du roulage du véhicule, de sorte que la dissolution des corps gras collés sur le pare brise est accrue.
Ledit liquide de lavage utilisé lors de ladite phase de lavage pourra aussi être moussant, de sorte qu'un effet mécanique sera ajouté à l'effet ramollissant du liquide.
Il est d'ailleurs à noter que l'invention concerne également un liquide de lavage comportant tout ou partie des susdites caractéristiques.

Selon encore une autre caractéristique du procédé conforme à l'invention, la pression de projection du liquide de lavage lors de ladite phase de lavage, c'est-à-dire véhicule à l'arrêt, est réduite relativement à une pression de projection utilisée lors du roulage, par exemple de la moitié au quart de celle-ci, de sorte que la dispersion du liquide de lavage sur le pare brise est favorisée et la perte de produit par une projection trop large du produit de lavage sur le pare brise est réduite.

Selon encore une caractéristique de l'invention, la phase d'essuyage est réalisée dans un mouvement des balais à vitesse plus lente qu'une vitesse utilisée lors du roulage du véhicule, par exemple de la moitié au quart de celle-ci, en particulier de moins d'un cycle d'essuyage par seconde, de sorte que le frottement du mélange visqueux de liquide de lavage et salissures par la lame de balai est rendu plus efficace.

Selon encore une autre caractéristique de l'invention, le mouvement des balais peut être saccadé, ceci à une fréquence angulaire la plus élevée possible, par exemple à moins de 5°.

On peut envisager également un mouvement d'aller-retour des balais, par exemple une avancée de 5°, suivie d'un recul de 3°.

Autrement dit, le mouvement des balais comprend des phases de progression, selon un premier angle, alternant avec des phases d'arrêt et/ou des phases de recul, selon un second angle, inférieur au premier angle.

Par ailleurs, le cycle de nettoyage du pare brise peut se répéter plusieurs fois, à déterminer en fonction des souhaits de l'utilisateur ou la programmation du véhicule.

L'invention concerne aussi un dispositif de contrôle embarqué dans ledit véhicule, ledit dispositif étant configuré pour la mise en oeuvre du procédé de nettoyage décrit plus haut.

Ledit dispositif de contrôle comprend, par exemple, des moyens de test de la présence d'eau et/ou de pluie sur le pare-brise et des moyens pour configurer un cycle de nettoyage du pare brise.

Lesdits moyens de test de la présence d'eau et/ou de pluie sur le pare-brise comportent, par exemple, un capteur de pluie pour une détection de pluie ou d'eau ou de liquide de lavage sur le pare brise.

Lesdits moyens pour configurer ledit cycle de nettoyage du pare brise comprennent des moyens matériels ou « hardware » et des moyens de traitement numériques ou « software » propres à piloter lesdites étapes du susdit procédé. Lesdits moyens matériels et/ou lesdits moyens de traitement numérique comprennent, par exemple, un calculateur indépendant et/ou sont intégrés au moins en partie dans un calculateur d'habitacle du véhicule.

Ledit dispositif de contrôle est avantageusement apte à être actionné au moyen d'une commande à distance.

L'invention concerne d'ailleurs aussi un ensemble d'un tel dispositif de contrôle et de ladite commande à distance ainsi que ladite commande à distance proprement dite.

Ladite commande à distance est configurée, par exemple, pour émettre un signal d'activation du cycle de nettoyage. Il s'agit, notamment, d'un téléphone portable, d'une télécommande infrarouge et/ou d'une télécommande utilisant un mode de communication tels que ceux connus sous les noms de Wifi, Bluetooth, Zigbee.

A ce sujet, lesdits moyens pour configurer ledit cycle de nettoyage du pare brise comprennent avantageusement des moyens récepteur et/ou intégrateur, correspondant, dudit signal d'activation du cycle de nettoyage, par exemple une calculateur télématique, un simple récepteur radio, infrarouge, ou autre.

Ils pourront en outre comprendre un dispositif de transmission dudit signal d'activation du cycle de nettoyage, par exemple un réseau de communication électronique du véhicule (LIN, CAN, MOST, Flexray ou autre...).

Ledit dispositif de contrôle pourra comporter également un capteur de niveau de charge de batterie à même de contrôler si l'alimentation en énergie du système pour réaliser ledit cycle de nettoyage, est suffisante.

Cela étant, l'invention concerne encore un programme d'ordinateur, enregistrable dans une mémoire de ladite commande à distance, ledit programme comportant des instructions pour la mise en oeuvre de la phase d'activation à distance du procédé de nettoyage décrit plus haut, lorsque le programme est exécuté par un processeur. Il pourra ainsi s'agir d'une application numérique chargée sur le téléphone servant de télécommande à distance.

L'invention concerne également un système de nettoyage d'un pare brise comprenant ledit dispositif de contrôle, ledit système de nettoyage comprenant un dispositif de lavage du pare brise et un dispositif d'essuyage du pare brise.

Le dispositif d'essuyage du pare brise pourra comprendre au moins un balai comportant un dispositif de lavage embarqué, lequel favorise la dispersion du liquide de lavage sur le pare brise.

Le système comporte avantageusement deux réservoirs de liquide de lavage, un premier réservoir pour le lavage du pare brise lors du roulage et un deuxième réservoir pour ledit nettoyage du pare brise selon le susdit procédé, le liquide de lavage du deuxième réservoir étant adapté en conséquence.

L'invention est illustrée ci après à l'aide d'un mode de réalisation de l'invention et en référence aux dessins annexés, sur lesquels :
La figure 1 est un schéma bloc d'un système de nettoyage de pare brise de véhicule selon un mode de réalisation de l'invention.
La figure 2 est un organigramme illustrant un cycle de nettoyage du système de la figure 1.

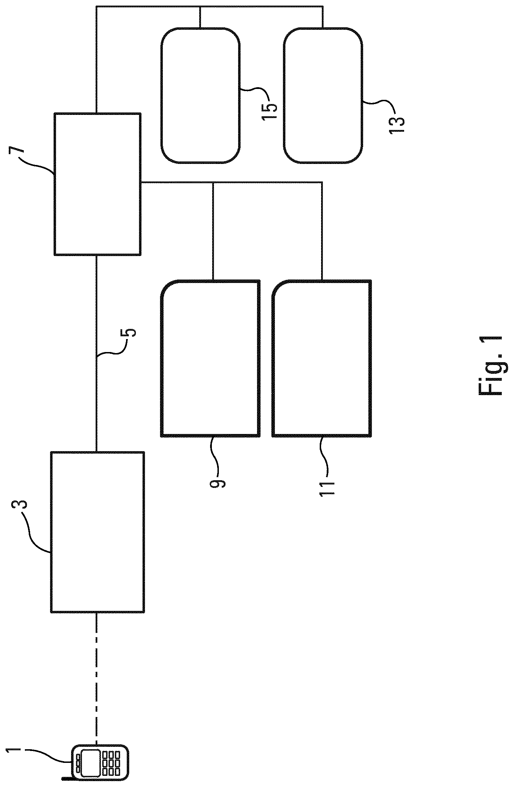

Comme illustré à la figure 1, le système représenté communique avec un moyen de commande permettant d'activer à distance un cycle de nettoyage du pare brise d'un véhicule, par exemple un téléphone portable 1 dans lequel on a chargé une application configurée pour émettre un signal hyperfréquence correspondant.

Plus généralement, il pourra s'agir de tout téléphone portable émettant un signal reconnaissable par un ordinateur de bord. Ledit téléphone pourra intégrer un support lisible par un microprocesseur dudit téléphone, ledit support stockant des instructions exécutables par ledit microprocesseur et permettant l'émission dudit signal, voire la réception d'informations en retour.

Ledit système comprend, par exemple, un moyen récepteur du signal émis par le téléphone portable, tel qu'un dispositif ECU télématique 3 avec antenne du véhicule, un dispositif de transmission d'un signal émis par le dispositif ECU télématique pour l'activation d'un cycle de nettoyage du pare brise, tel un réseau de communication électronique 5 du véhicule, par exemple de type LIN, CAN, MOST, Flexray ou autre, un calculateur du système d'essuyage, dit ECU essuyage 7 qui est ici un dispositif ECU dédié à l'essuyage du pare brise de véhicule, un capteur de pluie 9 disposé sur le pare brise, un capteur de niveau de charge de batterie 11 contrôlant que l'alimentation en énergie du système pour réaliser ledit cycle de nettoyage est suffisante. On forme ainsi un dispositif de contrôle embarqué.

Ledit système comprend encore, notamment, un dispositif de lavage du pare brise comprenant au moins un bocal de liquide de lave glace (non représenté), une pompe de liquide lave glace 13 et des moyens de projections dudit liquide (non-représenté) et un dispositif d'essuyage du pare brise pourvu d'un ou de balais d'essuyage (non représentés) actionnés par un ou des moteurs d'essuyage 15 par l'intermédiaire de bras et d'une pignonerie (non-représentés) reliant lesdits bras et lesdits moteurs 15.

L'ECU essuyage 7 est relié au capteur de pluie 9 et au capteur de niveau de charge de batterie 11, recevant les signaux respectifs de niveau de pluie et de charge de batterie, et au(x) moteur(s) d'essuyage 15 et à la pompe de liquide lave glace 13 pour commander l'activation de ces éléments. Il fonctionne selon le cycle activé par le moyen de commande à distance, tel que cela sera développé plus loin, et/ou selon un cycle activé, de façon classique, par des moyens de commande sous volants.

Il est à noter que cet ECU essuyage 7 pourrait encore être relié à un dispositif de réchauffage du liquide de lavage, par exemple disposé au niveau des gicleurs ou encore sur le bocal de lave glace, et éventuellement à une vanne trois voies ou plus, elle-même en liaison avec deux réservoirs de lave glace distincts pour commander la projection d'un liquide de lave glace adapté au nettoyage du pare brise selon que l'on est en roulage ou en activation à distance du cycle de nettoyage.

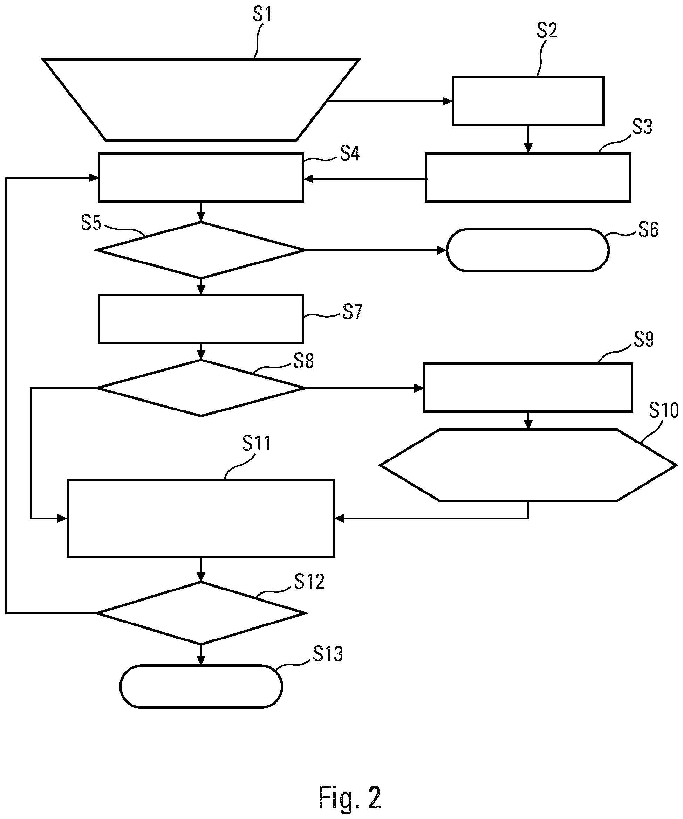

Le fonctionnement du système est décrit ci après en relation avec des étapes de procédé telles qu'elles apparaissent dans l'organigramme de la figure 2.

On suppose, dans un cas typique de l'invention, que l'automobiliste veuille accéder à son véhicule pour l'utiliser tout en étant sûr que la pare-brise sera propre pour le démarrage du véhicule

On rappelle qu'au sens de l'invention, il est question de réaliser l'activation d'un cycle de nettoyage du pare-brise du véhicule, en particulier d'évaluer si une phase de lavage est nécessaire.

L'utilisateur envoie à l'étape S1 un signal de commande de nettoyage via son téléphone portable 1 en direction du véhicule, lequel le reçoit via l'ECU télématique (étape S2) et le transmet à l'ECU essuyage à l'étape S3.

L'ECU essuyage interroge alors le capteur de niveau de batterie à l'étape S4. A l'étape suivante S5 si la batterie est suffisamment chargée le cycle peut continuer sinon il est interrompu à l'étape S6 et l'utilisateur en est informé.

Ensuite, l'ECU essuyage interroge le capteur de pluie à l'étape S7. A l'étape suivante S8, s'il n'y a pas de pluie, l'ECU essuyage lance la pompe de lave glace à l'étape S9 pour arroser le pare brise en produit lave glace, à une vitesse d'entrainement basse, de manière à émettre une pression de projection du liquide qui soit réduite (par exemple de la moitié), par rapport à la pression de projection classique de liquide lave glace utilisée lors du roulage du véhicule, et réaliser une bonne dispersion du liquide lave glace sur le pare brise.

Une étape successive S10 consiste à attendre une imprégnation des impuretés en liquide de lavage avant de lancer le moteur d'essuyage à l'étape S11, par exemple 30 secondes.

On déplace alors les balais sur le pare-brise pour enlever les impuretés dissoutes en produit visqueux. Ce déplacement qui va parcourir tout le pare-brise se fera selon un mouvement évolué par rapport à l'essuyage habituel.

On sait que, d'une part le frottement statique est presque toujours supérieur au frottement dynamique, et d'autre part que le frottement dynamique baisse avec la vitesse dans le cas du frottement visqueux, ce qui est notre cas à cause du liquide lave-glace. On va donc chercher à avoir un frottement maximal entre le système d'essuyage, à savoir, ici la surface du caoutchouc du balai et les impuretés. Il est donc tout à fait avantageux de déplacer les balais très lentement à la surface des impuretés, par exemple à moins de 1 cycle d'essuyage par seconde. Pour éviter tout doute, on appelle ici cycle d'essuyage un mouvement angulaire complet du balai partant d'une position de repos à une position de déplacement angulaire maximale, complété du retour jusqu'à sa position de repos.

Lors dudit cycle d'essuyage, les balais pourront s'arrêter pour redémarrer, et ceci à une fréquence angulaire la plus élevée possible, par exemple à moins de 5° par mouvement. On peut encore envisager un mouvement d'aller et retour de faible amplitude, par exemple une avancée de 5°, suivie d'un recul de 3° par mouvement.

Par ailleurs ce cycle complet peut se répéter N fois (étape S12) avec reprise à l'étape S4, N étant à déterminer en fonction des souhaits de l'utilisateur ou la programmation du véhicule. Au terme des N fois, le processus est terminé à l'étape S13.

A titre de variante, on peut encore imaginer que le capteur de pluie 9 se réveille une fois par jour lorsque le véhicule est à l'arrêt. Si à ce moment précis, il détecte de l'eau alors on peut profiter de cette opportunité pour faire un balayage à vitesse très lente.

Les moyens de projections du liquide de lavage comprennent, par exemple, deux gicleurs distincts reliés à la pompe de lave-glace. En variante, ils pourront être intégré au dispositif d'essuyage, ce dernier comportant un arrosage embarqué dans un bras ou un balai, ce qui améliore encore la dispersion du liquide de lavage sur le pare brise.

Le système sera avantageusement équipé de moteur(s) electronisé(s), permettant de maitriser très facilement leur vitesse, leur arrêt et leur redémarrage.

On peut affiner le système en tenant compte du niveau de lave-glace, de manière à en laisser, par exemple, toujours 25%. On utilise par exemple pour cela une information de niveau de liquide lave-glace, prévue disponible sur le réseau électronique du véhicule.

## Revendications

1. Procédé de nettoyage d'un pare brise d'un véhicule, notamment automobile, le procédé comprenant une phase d'activation à distance d'un cycle de nettoyage d'un pare-brise dudit véhicule, ledit cycle de nettoyage comprenant au moins une phase d'essuyage S11 à l'aide d'un dispositif d'essuyage dudit véhicule, ledit cycle comprend une phase préalable S9 de lavage du pare-brise à l'aide d'un dispositif de lavage dudit véhicule **caractérisé en ce que** le procédé comprend une phase S8 de test de la présence d'eau et/ou de pluie sur le pare-brise, destinée à configurer le cycle de nettoyage du pare brise, et
dans lequel un résultat positif de la phase de test S8 active la phase d'essuyage S11 du pare brise et/eu un résultat négatif de la phase de test S8 autorise une phase de lavage S9 du pare brise suivie d'une phase d'attente S10, avant activation de la phase d'essuyage S11 du pare-brise.

2. Procédé selon la revendication 1 dans lequel:
- ladite phase S11 d'essuyage comprend une phase d'actionnement de balais dudit dispositif d'essuyage,
- ladite phase S9 de lavage comprend une phase de projection d'un liquide de lavage sur le pare-brise du véhicule, et/ou
- ladite phase d'attente S10 utilise une durée d'attente prédéterminée.

3. Procédé selon la revendication 2 dans lequel la phase d'essuyage S11 est réalisée dans un mouvement des balais présentant une vitesse de moins d'un cycle d'essuyage par seconde.

4. Procédé selon l'une des revendications 2 ou 3 dans lequel la phase d'essuyage comprend des phases de progression des balais, selon un premier angle, alternant avec des phases d'arrêt et/ou des phases de recul, selon un second angle, inférieur au premier angle.

5. Dispositif de contrôle embarqué dans ledit véhicule, ledit dispositif étant configuré pour la mise en oeuvre du procédé de nettoyage selon l'une quelconque des revendications 1 à 4.

6. Dispositif de contrôle selon la revendication 5, comprenant des moyens (11) de test de la présence d'eau et/ou de pluie sur le pare-brise et des moyens (7) pour configurer le cycle de nettoyage du pare brise.

7. Dispositif de contrôle selon l'une quelconque des revendications 5 ou 6, apte à être actionné au moyen d'une commande à distance (1).

8. Ensemble d'un dispositif de contrôle selon la revendication 7 et de ladite commande à distance (1).

9. Commande à distance dudit ensemble selon la revendication 8, comprenant un programme comportant des instructions pour la mise en oeuvre de la phase d'activation à distance du procédé de nettoyage selon l'une quelconque des revendications 1 à 4.

10. Programme d'ordinateur, enregistrable dans une mémoire de ladite commande à distance selon la revendication 9, ledit programme comportant des instructions pour la mise en oeuvre de la phase d'activation à distance dudit procédé de nettoyage selon l'une quelconque des revendications 1 à 4, lorsque le programme est exécuté par un processeur.

11. Système de nettoyage d'un pare brise comprenant un dispositif de contrôle selon la revendication 5.

12. Système de nettoyage selon la revendication 11 comprenant un dispositif d'essuyage et un dispositif de lavage.

## Patentansprüche

1. Verfahren zur Reinigung einer Windschutzscheibe eines Fahrzeugs, insbesondere Kraftfahrzeugs, wobei das Verfahren eine Phase der Fernaktivierung eines Reinigungszyklus einer Windschutzscheibe des Fahrzeugs umfasst, wobei der Reinigungszyklus mindestens eine Wischphase S11 mit Hilfe einer Wischvorrichtung des Fahrzeugs umfasst, wobei der Zyklus eine vorherige Waschphase S9 der Windschutzscheibe mit Hilfe einer Waschvorrichtung des Fahrzeugs umfasst, **dadurch gekennzeichnet, dass** das Verfahren eine Testphase S8 des Vorhandenseins von Wasser und/oder Regen auf der Windschutzscheibe umfasst, die dazu bestimmt ist, den Reinigungszyklus der Windschutzscheibe einzurichten, und bei dem ein positives Resultat der Testphase S8 die Reinigungsphase S11 der Windschutzscheibe aktiviert und ein negatives Resultat der Testphase S8 eine Waschphase S9 der Windschutzscheibe, gefolgt von einer Wartephase S10, vor Aktivierung der Reinigungsphase S11 der Windschutzscheibe autorisiert.

2. Verfahren nach Anspruch 1, bei dem:
- die Reinigungsphase S11 eine Betätigungsphase eines Wischblatts der Wischvorrichtung umfasst,
- die Waschphase S9 eine Phase des Spritzens einer Waschflüssigkeit auf die Windschutzscheibe des Fahrzeugs umfasst, und/oder
- die Wartephase S10 eine vorbestimmte Wartezeit verwendet.

3. Verfahren nach Anspruch 2, bei dem die Wischphase S11 in einer Bewegung der Wischblätter durchgeführt wird, die eine Geschwindigkeit von weniger als einem Wischzyklus pro Sekunde aufweist.

4. Verfahren nach einem der Ansprüche 2 oder 3, bei dem die Wischphase Phasen des Vorrückens der Wischblätter in einem ersten Winkel umfasst, die mit Halte- und/oder Rückzugsphasen in einem zweiten Winkel, der kleiner als der erste Winkel ist, alternieren.

5. Kontrollvorrichtung, die in das Fahrzeug eingebaut ist, wobei die Vorrichtung für den Einsatz des Reinigungsverfahrens nach einem der Ansprüche 1 bis 4 eingerichtet ist.

6. Kontrollvorrichtung nach Anspruch 5, umfassend Mittel (11) zum Testen des Vorhandenseins von Wasser und/oder Regen auf der Windschutzscheibe und Mittel (7) zum Einrichten des Reinigungszyklus der Windschutzscheibe.

7. Kontrollvorrichtung nach einem der Ansprüche 5 oder 6, die geeignet ist, mit Hilfe einer Fernsteuerung (1) betätigt zu werden.

8. Einheit aus einer Kontrollvorrichtung nach Anspruch 7 und der Fernsteuerung (1).

9. Fernsteuerung der Einheit nach Anspruch 8, umfassend ein Programm, umfassend Anweisungen für den Einsatz der Fernaktivierungsphase des Reinigungsverfahrens nach einem der Ansprüche 1 bis 4.

10. Computerprogramm, das in einem Speicher der Fernsteuerung nach Anspruch 9 speicherbar ist, wobei das Programm Anweisungen für den Einsatz der Fernaktivierungsphase des Reinigungsverfahrens nach einem der Ansprüche 1 bis 4 umfasst, wenn das Programm von einem Prozessor ausgeführt wird.

11. Reinigungssystem einer Windschutzscheibe, umfassend eine Kontrollvorrichtung nach Anspruch 5.

12. Reinigungssystem nach Anspruch 11, umfassend eine Wischvorrichtung und eine Waschvorrichtung.

## Claims

1. Method for cleaning a windscreen of a vehicle, in particular a motor vehicle, the method comprising a phase of remote activation of a cycle of cleaning a windscreen of said vehicle, said cleaning cycle comprising at least one wiping phase S11 with the aid of a wiping device of said vehicle, said cycle comprises a prior phase S9 of washing the windscreen with the aid of a washing device of said vehicle, **characterized in that** the method comprises a phase S8 of testing for the presence of water and/or rain on the windscreen, said phase being intended to configure the windscreen cleaning cycle, and in which a positive result of the testing phase S8 activates the windscreen wiping phase S11 and a negative result of the testing phase S8 authorizes a windscreen washing phase S9 followed by a waiting phase S10 before the windscreen wiping phase S11 is activated.

2. Method according to Claim 1, in which:
- said wiping phase S11 comprises a phase of actuating blades of said wiping device,
- said washing phase S9 comprises a phase of projecting a washing liquid onto the windscreen of the vehicle, and/or
- said waiting phase S10 makes use of a predetermined waiting time.

3. Method according to Claim 2, in which the wiping phase S11 is carried out by a movement of the blades at a speed of less than one wiping cycle per second.

4. Method according to either of Claims 2 and 3, in which the wiping phase comprises advancing phases of the blades at a first angle, alternating with stopping phases and/or return phases at a second angle less than the first angle.

5. Control device intended to be installed on board said vehicle, said device being configured to implement the cleaning method according to any one of Claims 1 to 4.

6. Control device according to Claim 5, comprising means (11) for testing for the presence of water and/or rain on the windscreen and means (7) for configuring the windscreen cleaning cycle.

7. Control device according to either of Claims 5 and 6, which is able to be actuated by means of a remote control (1).

8. Assembly of a control device according to Claim 7 and said remote control (1).

9. Remote control for said assembly according to Claim 8, comprising a computer program comprising instructions for implementing the remote activation phase of said cleaning method according to one of Claims 1 to 4.

10. Computer program which is savable in a memory of said remote control according to Claim 9, said program comprising instructions for implementing the remote activation phase of said cleaning method according to one of Claims 1 to 4 when the program is run on a processor.

11. Windscreen cleaning system comprising a control device according to Claim 5.

12. Cleaning system according to Claim 11, comprising a cleaning device and a washing device.
